# EUROPEAN PATENT SPECIFICATION

(11) **EP 3 262 788 B1**
(45) Date of publication and mention of the grant of the patent: **09.09.2020**
(21) Application number: 16709856.5
(22) Date of filing: 17.02.2016
(51) Int. Cl.: H04L 12/14, H04W 24/02

(54) **NETWORK SUPPORT FOR DIFFERENTIAL CHARGING FOR DATA USAGE IN LICENSED AND UNLICENSED FREQUENCY BANDS**
NETZWERKUNTERSTÜTZUNG FÜR DIFFERENTIELLES LADEN FÜR DATENNUTZUNG IN LIZENZIERTEN UND UNLIZENZIERTEN FREQUENZBÄNDERN
PRISE EN CHARGE DE RÉSEAU POUR UNE FACTURATION DIFFÉRENTIELLE POUR UNE UTILISATION DE DONNÉES DANS DES BANDES DE FRÉQUENCES AUTORISÉES ET NON AUTORISÉES

(30) Priority: 25.02.2015 US 201514631310
(43) Date of publication of application: 03.01.2018
(73) Proprietor: Alcatel Lucent, 91620 Nozay (FR)
(72) Inventor: KHAWER, Mohammad, Murray Hill, NJ 07974-0636 (US); CAI, Yigang, Naperville, IL 60563-1594 (US); SONI, Robert, Murray Hill, NJ 07974-0636 (US)
(74) Representative: Louis Pöhlau Lohrentz
(86) International application number: PCT/US2016/018329
(87) International publication number: WO 2016/137800

(56) References cited:
- WO-A1-2013/010005
- WO-A1-2014/130446

## Description

### BACKGROUND

### Field of the Disclosure

The present disclosure relates generally to wireless communication systems and, more particularly, to licensed and unlicensed frequency bands in wireless communication systems.

### Description of the Related Art

The demand for mobile wireless data has been growing at an exponential rate and is expected to continue to grow by many orders of magnitude in the coming years. Meeting the increasing demand will require a corresponding increase in the amount of spectrum available for wireless communication. The available spectrum can be increased by combining licensed frequency bands with unlicensed frequency bands. Unlicensed frequency bands are portions of the radiofrequency spectrum that do not require a license for use and may therefore be used by any device to transmit or receive radio frequency signals. For example, the Unlicensed National Information Infrastructure (UNII) is formed of portions of the radio spectrum that Include frequency bands in the range of 5.15 GHz to 5.825 GHz such as the U-NII-1 band in the range 5.15-5.25 GHz, the U-NII 2a, b, c bands in the range 5.25-5.725 GHz, and the U-NII 3 band in the range 5.725-5.825 GHz. Unlicensed frequency bands can be contrasted to licensed frequency bands that are licensed to a particular service provider and may only be used for wireless communication that is authorized by the service provider. The cost of providing wireless data over licensed frequency bands differs from the cost of providing wireless data over unlicensed frequency bands. However, there is no mechanism in place for charging users for data transmitted over unlicensed frequency bands.

WO2014/130446A1 describes a method for charging for providing a content to a end user. The end user attaches to the network by means of a Wireless Transmit/Receive Unit (WTRU). The WTRU transmits a request for content of the end user to a content provider via a Converged Gateway (CGW). The CGW sends an authentication/authorization (AA) request to the PCRF, wherein the AA request includes charging information. The PCRF sends Policy and Charging Control (PCC) rules to the Policy and Charging Enforcement Function (PCEF), wherein the charging is based on whether licensed or unlicensed spectrum is used to deliver the content. The PCRF provides the PCC rules to the CGW.

### SUMMARY OF EMBODIMENTS

The invention provides a method defined in a system per claim 1 and a method defined in a base station per claim 5. Preferred embodiments of the invention are defined in the dependent claims.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a diagram of a wireless communication system according to some embodiments.
FIG. 2 is a block diagram of a network charging system according to some embodiments.
FIG. 3 is a block diagram of a message that may be used to convey information associated with policies governing selective allocation of licensed and unlicensed frequency bands according to some embodiments.
FIG. 4 is a timing diagram of a method of defining policies and selectively allocating the licensed and unlicensed frequency bands based on the policies according to some embodiments.
FIG. 5 is a timing diagram of a method of defining policies and selectively allocating the licensed and unlicensed frequency bands based on policies that are modified in response to modification of the corresponding call session according to some embodiments.
FIG. 6 is a block diagram of a communication system according to some embodiments.

### DETAILED DESCRIPTION

Wireless communication systems can support differential charging for wireless data transmitted over licensed frequency bands and unlicensed frequency bands using a policy charging and rules function (PCRF) that establishes policies for allocating licensed frequency bands and unlicensed frequency bands to user equipment based on tariffs for the user equipment in the licensed and unlicensed frequency bands. In some embodiments, an online charging system (OCS) provides data usage tariffs to smart pricing functionality implemented in the PCRF, which generates the policies and transmits them to one or more base stations. The base stations may then use the policies to selectively allocate the licensed frequency bands and unlicensed frequency bands to the user equipment in response to the user equipment establishing a call session such as an internet Protocol-Connectivity Access Network (IP-CAN) session with the PCRF.

Some embodiments of policies define one or more rules that indicate when the licensed or unlicensed frequency bands are to be allocated to the user equipment. For example, the policy may include a rule that indicates that the base station should hand over best effort data transmission for the session from a licensed frequency band to an unlicensed frequency if a data usage tariff for the unlicensed frequency band is less than a data usage tariff for the licensed frequency band. For another example, the policy may include a rule that indicates that the base station should hand over best effort data transmission for the session to the licensed or unlicensed frequency band that has the highest signal-to-noise ratio (SNR). Combinations of rules may also be used to selectively allocate the licensed and unlicensed frequency bands. The charging policies may include a time value that is used to indicate a valid duration of the charging policy. Some embodiments of the PCRF update the policies in response to expiration of the timer, in response to a request from the base station, in response to changing network conditions, or in response to other signaling.

Attribute-value pairs may be defined to convey information associated with the unlicensed frequency bands over interfaces between the PCRF and the OCS, interfaces between the PCRF and the gateway, or other interfaces. An attribute-value pair (which may also be referred to as a name-value pair, a key-value pair, or a field-value pair) is a data structure formed of a tuple that indicates the name of a particular attribute and a value of the attribute. For example, the tuple may have the form: <attribute name, value>. In some embodiments, the attribute-value pairs include information identifying an entity associated with the base station that supports communication in the unlicensed frequency bands, criteria for handing off between the licensed and unlicensed frequency bands, charging rules for the unlicensed frequency bands, activation or deactivation times for the rules, and the like.

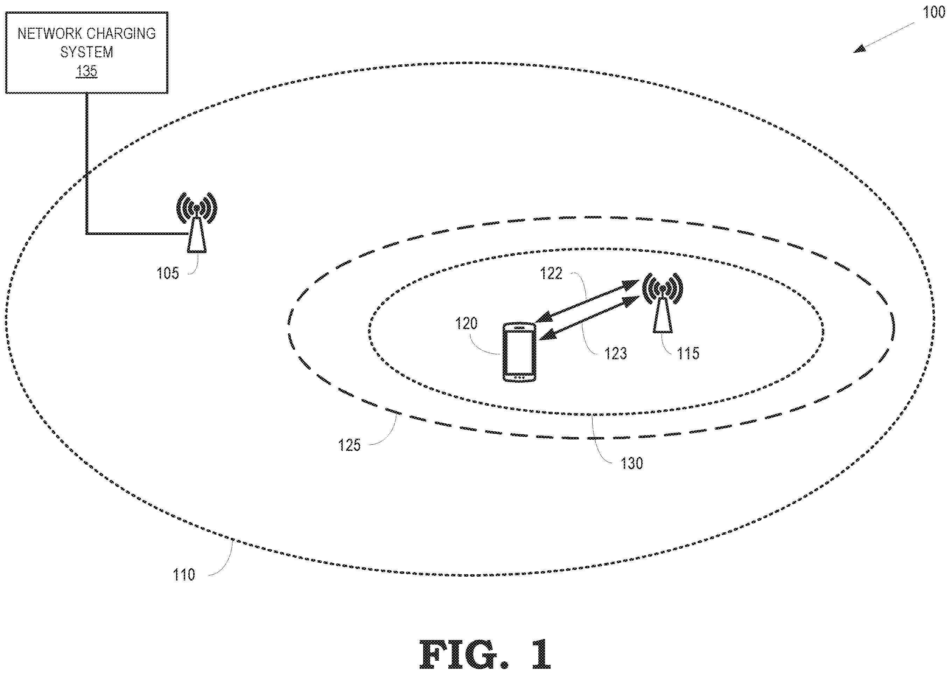

FIG. 1 is a diagram of a wireless communication system 100 according to some embodiments. The wireless communication system 100 includes one or more eNodeBs 105 that provide wireless connectivity according to a first radio access technology, *e.g.,* according to the Long Term Evolution (LTE) standards defined by the Third Generation Partnership Project (3GPP). The eNodeB 105 provides wireless connectivity within a first geographical area or cell 110. The wireless communication system 100 also includes one or more small cells 115 that provide wireless connectivity according to the first radio access technology. As used herein, the term "base station" may be used to indicate eNodeBs that are part of a macrocellular network or small cells that overlay the macrocellular network.

Small cells may also be referred to as home base station routers, metrocells, microcells, picocells, femtocells, and the like.

The small cell 115 may provide uplink or downlink communications to user equipment 120 over one or more carriers 122 in a licensed frequency band within the cell indicated by the dashed oval 125. The licensed carriers 122 may be referred to as LTE licensed (LTE-L) carriers. The small cell 115 may also support wireless connectivity over carriers 123 in one or more unlicensed frequency bands within a cell indicated by the dashed oval 130. The unlicensed carriers 123 may be referred to as LTE unlicensed (LTE-U) carriers. Some embodiments of the small cell 115 may also support wireless connectivity over other unlicensed carriers (not shown in FIG. 1) according to other radio access technologies such as Wi-Fi, as defined by the IEEE 802 standards. The unlicensed frequency bands may include the Unlicensed National Information Infrastructure (UNII), which is formed of portions of the radio spectrum that include frequency bands in the range of 5.15 GHz to 5.825 GHz such as the U-NII-1 band in the range 5.15-5.25 GHz, the U-NII 2a, b, c bands in the range 5.25-5.725 GHz, and the U-NII 3 band in the range 5.725-5.825 GHz. In some embodiments, the transmission power used by the small cell 115 to transmit signals in the licensed frequency band is larger than the transmission power used by the small cell 115 to transmit signals in the unlicensed frequency band. Consequently, the cell 125 is larger than the cell 130 in FIG. 1.

The small cell 115 may operate one or more of the unlicensed carriers 123 in different operating modes. For example, the small cell 115 may implement a supplemental downlink carrier in the unlicensed frequency band. The supplemental downlink carrier is used to carry best effort downlink data from the small cell 115 to the user equipment 120. A primary carrier is anchored in the licensed frequency band and is used to carry control data for the supplemental downlink carrier, as well as uplink data from the user equipment 120 to the small cell 115. For another example, the small cell 115 may implement a carrier aggregation mode in which a secondary carrier in the unlicensed frequency band carries both uplink and downlink best effort data. A primary carrier is anchored in the licensed frequency band and is used to carry control data for the secondary carrier.

As discussed herein, tariffs such as data usage tariffs may differ for data transmitted on the carrier 122 in the licensed frequency bands and data transmitted on the carrier 123 in the unlicensed frequency bands. The wireless communication system 100 can therefore be configured to support differential charging for wireless data transmitted over licensed frequency bands and unlicensed frequency bands. To support differential charging, a network charging system 135 generates policies that govern allocation of the licensed and unlicensed frequency bands on a per-user, per-call session basis. Some embodiments of the network charging system 135 include smart pricing functionality that generates policies for the user equipment 120 in response to the user equipment 120 requesting establishment of a call session with the small cell 115. The smart pricing functionality receives information indicating tariffs for the call session requested by the user equipment 120 and defines a policy governing allocation of the licensed or unlicensed frequency bands to the call session based on the received tariff information. The policies may then be transmitted to the small cell 115.

The small cell 115 can selectively allocate licensed frequency bands and unlicensed frequency bands to user equipment 120 based on the policy provided by the network charging system 135. Some embodiments of the small cell 115 implement a policy engine that determines whether to transmit data associated with a session over the carrier 122 in the licensed frequency band or the carrier 123 in the unlicensed frequency band based on a comparison of tariffs indicated in a charging policy. For example, the small cell 115 may hand over best effort data transmission for the session from the carrier 122 to the carrier 123 in response to the policy engine determining that a tariff for the unlicensed frequency band is less than a tariff for the licensed frequency band. The small cell 115 can collect and send charging parameters for the session (such as data usage, an indication of whether the data was transmitted in licensed or unlicensed frequency bands, a handover indicator, and the like) to the network charging system 135, which can determine the charges for the data usage and charge them to the correct user based on a session identifier, which identifies the session regardless of whether the data is transmitted in the licensed or unlicensed frequency band. Although the selective allocation is performed in the small cell 115 in the embodiment shown in FIG. 1, selective allocation as described herein may be performed by other types of base stations in some embodiments.

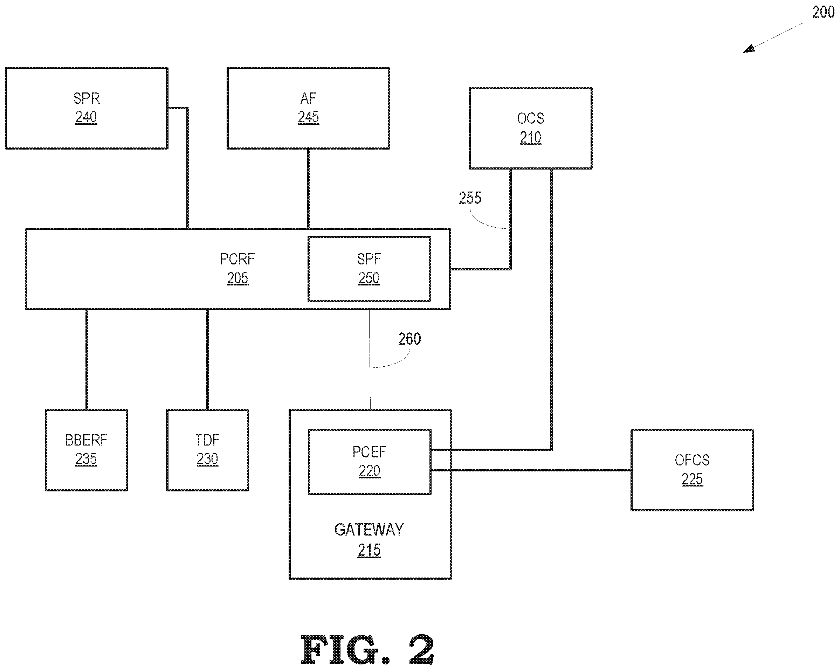

FIG. 2 is a block diagram of a network charging system 200 according to some embodiments. The network charging system 200 may be used to implement some embodiments of the network charging system 135 shown in FIG. 1. The network charging system 200 is used to determine a charge or an amount of money that is billed to an end-user. The architecture of the network charging system 200 may be defined according to the policy and charging control reference architecture defined by 3GPP TS 23.203, "Technical Specification Group Services and System Aspects, Policy and charging control architecture." However, other embodiments of the network charging system 200 may be defined according to other reference architectures.

The network charging system 200 includes a policy control and charging rules function (PCRF) 205 that performs policy control decision-making and flow based charging control. An online charging system (OCS) 210 can provide data usage tariffs or policies to the PCRF 205 to indicate the data usage tariffs for licensed and unlicensed frequency bands such as LTE-L, LTE-U, and Wi-Fi. The OCS 210 may provide the information in either a push mode (e.g., without a specific request from the PCRF 205) or a pull mode (*e.g*., in response to a request from the PCRF 205). The charging policies may be determined based on a subscriber's charging account or an account associated with a group of subscribers. The data usage tariff for the unlicensed frequency band may be much lower than the data usage tariff for the licensed frequency band. However, some embodiments of the OCS 210 may determine the data usage tariffs based on other factors such as network traffic, location of the user equipment, quality of service, ownership of a base station, and the like. Thus, the data usage tariff for the unlicensed frequency band may in some cases be higher than the data usage tariff for the licensed frequency band.

The network charging system 200 also includes a gateway 215 such as a serving gateway (SGW) or a mobility management entity (MME) that is connected to the PCRF 205. The gateway 215 may be used to support communication between the network charging system 200 and base stations, eNodeBs, small cells, and the like. The gateway 215 includes a policy and charging enforcement function (PCEF) 220 that performs dataflow detection, policy enforcement, and flow-based charging. The OCS 21 0 may be connected to the PCEF 220 to provide policy information used by the PCEF 220. An off-line charging system (OFCS) 225 is also included in the network charging system 200 and is connected to the PCEF 220 to provide policies for off-line charging.

A traffic detection function (TDF) 230 performs application detection and reporting of detected applications. The TDF 230 also provides service data flow descriptors to the PCRF 205. A bearer binding and event reporting function (BBERF) 235 is used to perform bearer binding and binding verification, as well as providing event reporting to the PCRF 205. A subscription profile repository (SPR) 240 contains all subscriber/subscription related information needed for subscription-based policies. The SPR 240 also stores information indicating IP-CAN bearer level rules used by the PCRF 205. An application function (AF) 245 offers applications that may require dynamic policy or charging control. The AF 245 can communicate with the PCRF 205 to transfer dynamic session information to the PCRF 205.

Some embodiments of the PCRF 205 include a smart pricing function (SPF) 250 that is configured to generate charging policies and provide the charging policies to base stations such as the small cell 115 shown in FIG. 1. The PCRF 205 may generate the charging policies based on conditions in the base station such as conditions that may be detected by the TDF 230. The PCRF 205 may provide the charging policies to the base station in response to a request from a user equipment to establish a call session. For example, the gateway 215 may provide a request to the SPF 250 indicating that a user equipment has requested establishment of the call session. In response, the SPF requests data usage tariffs and other charging or policy information for the requested call session from the OCS 210, which provides the requested tariffs or charging/policy information over an interface 255 such as an Sy interface. The SPF 250 may then generate policies that govern the selective allocation of licensed and unlicensed frequency bands to the user equipment for the call session based on the information provided by the OCS 210, as well as other information that may be provided by other entities in the network charging system 200. Some embodiments of the PCRF 205 and the SPF 250 may proactively (*e.g*., without a specific request from the user equipment) request charging/policy information from the OCS 210 for user equipment and generate policies for the user equipment.

Some embodiments of the PCRF 205 may provide the charging policies to the gateway 215 over an interface 260 such as a Gx interface. The gateway 215 may then forward the charging policies to a base station (such as the eNodeB 105 shown in FIG. 1) for transmission to the base station. The gateway 215 may also provide the charging policies directly to the base station in some embodiments. The PCRF 205 may statically configure the base stations based on information provided by the service providers or the base stations may be dynamically configured, *e.g*. in response to changes in data service criteria as discussed below.

The information used to generate or define policies in the network charging system 200 may be transmitted over the interfaces 255, 260 in the form of attribute-value pairs included in messages transmitted over the interfaces 255, 260. In some embodiments, the attributes include identifiers of one or more unlicensed frequency bands such as unlicensed frequency bands used for LTE-U or Wi-Fi communication, handover criteria for the unlicensed frequency bands, charging rules for the unlicensed frequency bands, an activation time for the policy, and a deactivation time for the policy. Some embodiments of base stations include multiple functional units for supporting communication in multiple unlicensed frequency bands or according to different radio access technologies such as LTE and Wi-Fi. The identifiers may therefore include names/values that identify the different functional units within the base station. The handover criteria may be a group attribute-value pair that includes values indicating criteria rules, rule install, rule remove, rule definitions, rule names, and the like. The charging rule information may include charging rules, rule install, rule remove, rule definitions, rule names, and the like. The activation time and the deactivation time are timestamp attribute-value pairs indicating times for activating or deactivating the rules indicated in the policy provided to the base station. Values in the attribute-value pairs may be defined by the PCRF 205, the OCS 210, the gateway 215, the PCEF 220, the SPF 250, or other entities in the network charging system 200.

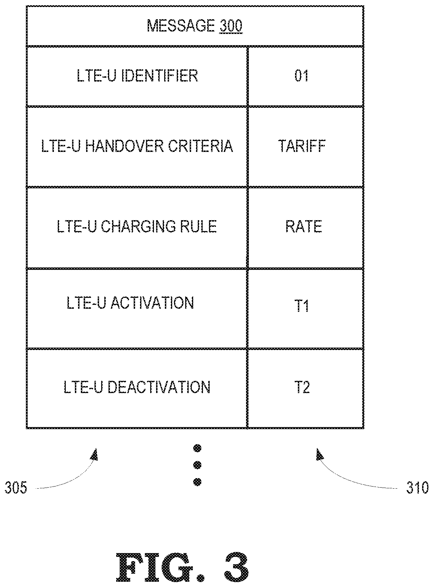

FIG. 3 is a block diagram of a message 300 that may be used to convey information associated with policies governing selective allocation of licensed and unlicensed frequency bands according to some embodiments. Some embodiments of the message 300 may be used to request tariff or policy information. For example, a PCRF such as the PCRF 205 shown in FIG. 2 may use embodiments of the messages 300 to request tariff or policy information from an OCS of the OCS 210 shown in FIG. 2. Some embodiments of the message 300 may be used to provide policies to base stations such as the small cell 115 shown in FIG. 1. For example, a PCRF may use embodiments of the message 300 to transmit policies to base stations via a gateway such as the gateway 215 shown in FIG. 2.

The message 300 includes one or more attribute-value pairs that are formed of attribute names 305 and corresponding values 310. One attribute-value pair in the message 300 is named "LTE-U IDENTIFIER" and the corresponding value "01" identifies a functional unit (such as a radio) within the corresponding small cell that supports LTE-U communication over an unlicensed frequency band. Another attribute-value pair in the message 300 is named "LTE-U HANDOVER CRITERIA" and has a value "TARIFF" that indicates a rule for handing off between a licensed frequency band and an unlicensed frequency band depending on which frequency band has a lower tariff. Another attribute-value pair in the message 300 is named "LTE-U CHARGING RULE" and has a value "RATE" that indicates a rate for billing data transmitted in the corresponding unlicensed frequency band. The message 300 also includes attribute-value pairs for "LTE-U ACTIVATION" that has a value "T1" to indicate when the policy is to be activated and "LTE-U DEACTIVATION" that has a value "T2" to indicate when the policy is to be deactivated.

The message 300 may also include other attribute-value pairs not shown in FIG. 1. For example, the message 300 may include attribute-value pairs for other radio access technologies such as Wi-Fi. For another example, the message 300 may include additional attribute-value pairs to define additional handover criteria such as threshold signal-to-noise ratios for handover between the licensed frequency bands in the unlicensed frequency bands. For yet another example, the message 300 may include additional attribute-value pairs to define additional charging rules such as rates for billing data transmitted on other licensed or unlicensed frequency bands. As discussed herein, the policies or rules indicated in some embodiments of the message 300 may be combined to determine rules for selectively allocating the licensed or unlicensed frequency bands. The policies or rules indicated in some embodiments of the message 300 may also be overridden so that the licensed or unlicensed frequency bands are selectively allocated based on other criteria evaluated at the base station.

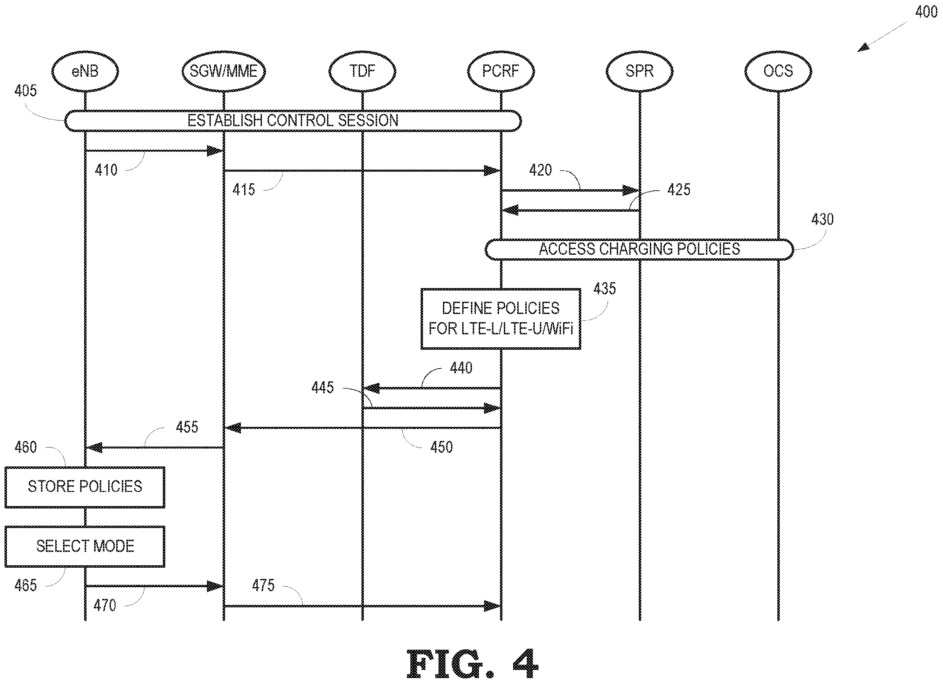

FIG. 4 is a timing diagram of a method 400 of defining policies and selectively allocating the licensed and unlicensed frequency bands based on the policies according to some embodiments. The method 400 may be implemented in some embodiments of the wireless communication system 100 shown in FIG. 1. At 405, a base station (eNB) establishes a control session with a PCRF in response to a request from the user equipment to establish a call session. The control session is established to provide control signaling over a licensed frequency band such as an LTE-L frequency band that is used to anchor the call session. The call session may also include a data session that is established over radio bearers (such as an IP-CAN bearer) in response to the request from the user equipment. The data session may be established using licensed frequency bands or unlicensed frequency bands that are selectively allocated by the base station based on policies generated by the PCRF. At 410, the base station provides a request to establish the radio bearers. For example, the base station may provide an IP-CAN bearer request to a gateway (SGW/MME), which forwards (at 415) the request to the PCRF over an interface such as a Gx interface. The request may include one or more attribute-value pairs, as discussed herein.

The PCRF requests (at 420) a profile for the user equipment from a subscription profile repository (SPR) such as the SPR 240 shown in FIG. 2. The SPR returns the requested profile at 425. In some embodiments, the profile includes information indicating a monthly allocation of bytes for data usage by the user equipment, a number or percentage of the monthly allocation that has already been used or is available for data usage, licensed (LTE-L) or unlicensed frequency bands (LTE-U, Wi-Fi) that are available to the subscriber, time of day constraints or discounts, and the like. At 430, the PCRF requests tariffs or other charging policy information from an online charging system (OCS) such as the OCS 210 shown in FIG. 2. The OCS may then provide this information to the PCRF. The tariffs may include information indicating tariffs for data transmitted over the licensed or unlicensed frequency bands that are available to the user equipment (as indicated in the profile information). The other charging policy information may include policies provided by service providers such as policies indicating that certain applications should preferentially use licensed or unlicensed frequency bands.

The PCRF defines (at 435) one or more policies based on the profile information, the tariffs, and (if available) other charging policy information. The policies include one or more rules for determining how licensed or unlicensed frequency bands are to be selectively allocated to the user equipment for the requested call session. For example, a rule may indicate that best effort traffic should be selectively allocated to the licensed or unlicensed frequency band that has the lowest tariff. In some embodiments, additional rules may be defined based on thresholds of measured parameters such as channel qualities, signal-to-noise ratios, received signal strengths, a speed or velocity of the user equipment, a location of the user equipment, ownership of a base station, and the like. Multiple sets of rules may be defined so that the base station can choose between the different sets of rules. In some embodiments, rules may be combined or overridden, as discussed herein. The PCRF then transmits (at 440) a request to establish a session with a traffic detection function (TDF) such as the TDF 230 shown in FIG. 2. The TDF responds (at 445) with a confirmation that the session has been established.

The PCRF transmits (at 450) a message to the gateway acknowledging the request to establish the call session. The message includes information defining policies for selective allocation of the licensed and unlicensed frequency bands. In some embodiments, the information defining the policies includes attribute-value pairs, as discussed herein. In response to receiving the acknowledgment, the gateway transmits (at 455) a response to the request from the base station to establish the IP-CAN bearer. The response includes information defining the policies for selective allocation of the licensed and unlicensed frequency bands. The base station stores (at 460) the information defining the policies so that this information can be subsequently used for selective allocation of the licensed or unlicensed frequency bands. For example, the information defining the policies may include an activation time or a deactivation time. The base station may selectively allocate the licensed or unlicensed frequency bands to the user equipment for the call session based on the policies without further consultation with the PCRF at times subsequent to the activation time and prior to the deactivation time. Some embodiments of the base station may request new policies in response to the current time being later than the deactivation time, in which case some or all of the steps 405, 410, 415, 420, 425, 430, 435, 440, 445, 450, 455, 460 may be repeated or iterated.

The base station selectively allocates (at 465) the licensed or unlicensed frequency bands based on the stored policies. Some embodiments of the base station may select an operational mode using rules indicated in the policies. For example, if a tariff for the unlicensed frequency band is less than a tariff for the licensed frequency band, the base station may select a supplemental downlink carrier mode so that best effort downlink data is conveyed to the user equipment in the unlicensed frequency band. For another example, if a tariff for the unlicensed frequency band is less than a tariff for the licensed frequency band, the base station may select a carrier aggregation mode so that both uplink and downlink best effort data are conveyed between the base station and the user equipment in the unlicensed frequency band. Some embodiments of the base station may override the stored policies in some circumstances. For example, the base station may override the stored policies if loading on the base station exceeds a threshold. The base station may then selectively allocate the licensed or unlicensed frequency bands to perform load balancing away from overloaded frequency bands and towards more lightly loaded frequency bands. For another example, the base station may override the stored policies based on channel conditions associated with the licensed frequency band or the unlicensed frequency band. The base station may then selectively allocate the licensed or unlicensed frequency bands to preferentially allocate the bands that have channel conditions above a threshold and avoid allocating the bands that have channel conditions below a threshold.

The base station transmits (at 470) a message to the gateway acknowledging establishment of the call session and the gateway forwards (at 475) the acknowledgment message to the PCRF. Some embodiments of the acknowledgment message may include information identifying the selected mode. The acknowledgment message may also include information indicating whether the operational mode was selected based on the provided policies or the policies were overridden.

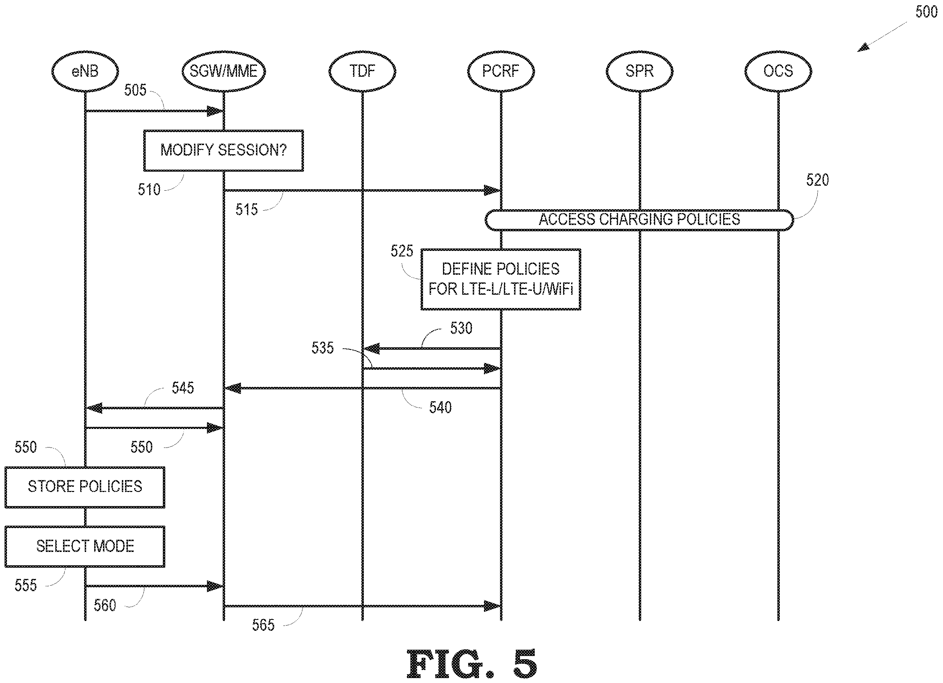

FIG. 5 is a timing diagram of a method 500 of defining policies and selectively allocating the licensed and unlicensed frequency bands based on policies that are modified in response to modification of the corresponding call session according to some embodiments. The method 500 may be implemented in some embodiments of the wireless communication system 100 shown in FIG. 1. Prior to step 505, a base station (eNB) has established a control session with a PCRF to support a call session for user equipment, *e.g*., according to embodiments of the method 400 shown in FIG. 4. For example, the call session may be used to transmit uplink or downlink data over radio bearers such as an IP-CAN bearer. The data session may be established using licensed frequency bands or unlicensed frequency bands that are selectively allocated by the base station based on policies generated by the PCRF.

At 505, the base station transmits a message to a gateway (SGW/MME) requesting a modification of the call session. Some embodiments of the base station may request modification of the call session in response to traffic changes, changes in loading of the base station, changes in channel conditions or signal strengths on the licensed or unlicensed frequency bands, user input to the user equipment indicating a requested modification, handover of one or more user equipment that are served by the base station, or other criteria. At 510, the gateway determines whether to modify the call session. If the gateway determines that the call session is to be modified in response to the request from the base station, the gateway transmits (at 515) a session modification request to the PCRF over an interface such as a Gx interface. The request may include one or more attribute-value pairs, as discussed herein. The values in the attribute-value pairs may differ from the values that were initially used to establish the call session to reflect the requested modification of the call session.

The PCRF requests (at 520) tariffs or other charging policy information for the modified call session from an OCS such as the OCS 210 shown in FIG. 2. The OCS may then provide this information to the PCRF. The tariffs may include information indicating tariffs for data transmitted over the licensed or unlicensed frequency bands that are available to the user equipment. The OCS 210 may use statically defined data usage tariffs or may dynamically determine the data usage tariffs based on factors such as network traffic, loading of the base station, location of the user equipment, quality of service, ownership of the base station, and the like. Thus, the data usage tariffs for the licensed or unlicensed frequency bands may change in response to the modifications in the call session. The other charging policy information may include policies provided by service providers such as policies indicating that certain applications should preferentially use licensed or unlicensed frequency bands. The PCRF defines (at 525) one or more new policies for the user equipment based on previously accessed profile information, the new tariffs, and (if available) other charging policy information. The PCRF then transmits (at 530) a request to modify the existing session with a TDF such as the TDF 230 shown in FIG. 2. The TDF responds (at 535) with a confirmation that the session has been modified.

The PCRF transmits (at 540) a message to the gateway acknowledging the request to modify the call session. The message includes information defining the new policies for selective allocation of the licensed and unlicensed frequency bands. In some embodiments, the information defining the policies includes attribute-value pairs that include different values than were used to previously define the policies. In response to receiving the acknowledgment, the gateway transmits (at 545) a response to the request from the base station to establish the IP-CAN bearer. The response includes information defining the new policies for selective allocation of the licensed and unlicensed frequency bands. The base station stores (at 550) the information defining the new policies so that this information can be subsequently used for selective allocation of the licensed or unlicensed frequency bands. As discussed herein, the base station may request another new set of policies in response to the current time being later than a deactivation time indicated by the new policies.

The base station selectively allocates (at 555) the licensed or unlicensed frequency bands based on the stored new policies, as discussed herein. The base station then transmits (at 560) a message to the gateway acknowledging establishment of the call session and the gateway forwards (at 565) the acknowledgment message to the PCRF. Some embodiments of the acknowledgment message may include information identifying the selected mode for the modified call session. The acknowledgment message may also include information indicating whether the operational mode was selected based on the provided policies or the policies were overridden.

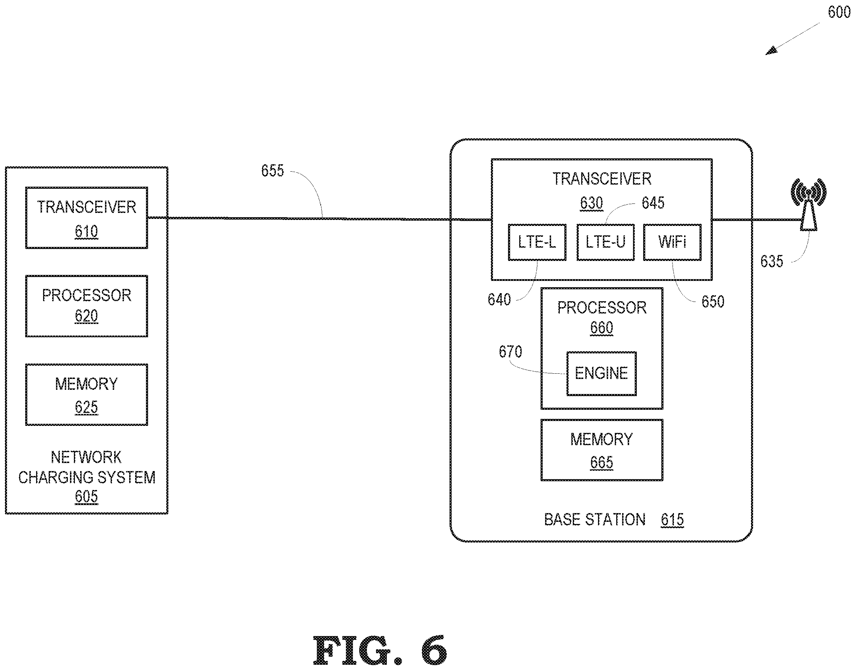

FIG. 6 is a block diagram of a communication system 600 according to some embodiments. The communication system 600 includes a network charging system 605 that generates and provides charging policies to entities in the communication system 600. Some embodiments of the network charging system 605 may be used to implement the network charging system 135 shown in FIG. 1 or the network charging system 200 shown in FIG. 2. The network charging system 605 includes a transceiver 610 for transmitting and receiving signals. For example, the network charging system 605 may generate charging policies and provide them to a base station 615, which may be used to implement embodiments of the small cell 115 shown in FIG. 1. The network charging system 605 also includes a processor 620 and a memory 625. The processor 620 may be used to execute instructions stored in the memory 625 and to store information in the memory 625 such as the results of the executed instructions. Some embodiments of the processor 620 and the memory 625 may be configured to perform portions of the method 400 shown in FIG. 4 or the method 500 shown in FIG. 5.

The base station 615 includes a transceiver 630 for transmitting and receiving signals via antenna 635. Some embodiments of the transceiver 630 include multiple radios for communicating according to different radio access technologies such as a radio 640 for communication in licensed LTE frequency bands (LTE-L), a radio 645 for communication in unlicensed LTE frequency bands (LTE-U), and a radio 650 for Wi-Fi communication in unlicensed frequency bands. For example, the LTE-L radio 640 may be used to communicate with user equipment in the licensed frequency band and the LTE-U radio 645 may be used to communicate with user equipment in the unlicensed frequency band. The base station 615 may receive charging policies generated by the network charging system 605 over the communication link 655.

The base station 615 also includes a processor 660 and a memory 665. The processor 660 may be used to execute instructions stored in the memory 665 and to store information in the memory 665 such as the results of the executed instructions. Some embodiments of the processor 660 and the memory 665 may be configured to perform portions of the method 400 shown in FIG. 4 or the method 500 shown in FIG. 5. For example, the processor 660 may implement a policy engine 670 that is used to selectively allocate licensed or unlicensed frequency bands (*e.g*., to selectively control operation of the radios 640, 645, 650) based on a charging policy provided by the network charging server 605 and stored in the memory 665.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (*e.g*., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

## Claims

1. A method comprising:
receiving (515), at a policy charging and rules function, PCRF, (205) a session modification request from a serving gateway, SGW, (215) in response to the SGW (215) receiving (505) a request from a base station (115) to modify a call session established between the base station (115) and a user equipment (120); the SGW (215) having determined (510) to modify the call session; the method being **characterized by**:
transmitting (520), from the PCRF (205) in response to the session modification request, a request to an Online Charging System, OCS, (210), for information indicating tariffs for using at least one unlicensed frequency band and at least one licensed frequency band that are available to the user equipment (120) during the modified call session;
defining (525), at the PCRF (205), one or more new policies for the user equipment (120) based on previously accessed profile information and the received information indicating tariffs from the OCS (210); and
transmitting (540, 545) the one or more new policies for selection allocation of the at least one unlicensed frequency band and the at least one licensed frequency band from the PCRF (205) to the base station (115) via the SGW (215);
selectively allocating (555), by the base station (115), the at least one unlicensed frequency band or the at least one licensed frequency band based on a comparison of tarrifs for the at least one unlicensed frequency band and the at least one licensed frequency band contained in the received one or more new policies.

2. The method of claim 1, wherein transmitting (520) the request for the information indicating the tariffs comprises transmitting a request including at least one first attribute-value pair associated with the at least one unlicensed frequency band, wherein transmitting (540, 545) the one or more new policies to the base station (115) comprises transmitting at least one second attribute-value pair associated with the at least one unlicensed frequency band, and wherein the at least one first attribute-value pair and the at least one second attribute-value pair are selected from a group comprising an identifier of the at least one unlicensed frequency band, handover criteria for the at least one unlicensed frequency band, a charging rule for the at least one unlicensed frequency band, an activation time for the one or more new policies, and a deactivation time for the one or more new policies.

3. The method of claim 1, wherein defining (525) the one or more new policies comprises defining a policy indicating that a best effort data transmission is to be handed over from a licensed frequency band to an unlicensed frequency band in response to a data usage tariff for the unlicensed frequency band being less than a data usage tariff for the licensed frequency band, wherein control data for the best effort data transmission is conveyed in the licensed frequency band.

4. The method of claim 1, wherein defining (525) the one or more new policies comprises further defining the one or more new policies based on at least one of a signal-to-noise ratio, a received signal strength, a speed or velocity of a user equipment (120), a location of the user equipment (120), the tariffs, and ownership of the base station (115).

5. A method comprising:
transmitting (505), from a base station (115) that support wireless connectivity in at least one licensed frequency band and at least one unlicensed frequency band, a request to a serving gateway, SGW, (215) to modify a call session for a user equipment (120); Z the method being **characterized by**:
receiving (540, 545), at the base station (115) from a policy charging and rules function, PCRF, (205), via the SGW (215), one or more new policies for the user equipment (120) governing allocation of the at least one licensed frequency band and the at least one unlicensed frequency band to the call session, wherein the one or more new policies are defined (525) by the PCRF (205) based on previously accessed profile information and information indicating tariffs received (520) at the PCRF (205) from an Online Charging System, OCS, (210) for using the at least one licensed frequency band and the at least one unlicensed frequency band that are available to the user equipment (120) during the call session in response to the PCRF (205) transmitting a request to the OCS (210) for the information indicating tariffs, and wherein the base station (115) receives (540, 545) the one or more new policies in response to the PCRF (205) receiving (515) a session modification request from the SGW, (215) in response to the SGW (215) receiving (505) the request from the base station (115) to modify the call session and the SGW (215) having determined (510) to modify the call session;
storing (550) the one or more new policies at the base station (115); and
selectively allocating (555), by the base station (115), the at least one licensed frequency band or the at least one unlicensed frequency band based on a comparison of tarrifs for the at least one licensed frequency band and the at least one unlicensed frequency band contained in the received one or more new policies.

6. The method of claim 5,
wherein selectively allocating (555) the at least one licensed frequency band and the at least one unlicensed frequency band comprises handing over best effort data transmission from a licensed frequency band to an unlicensed frequency band in response to a data usage tariff for the unlicensed frequency band being less than a data usage tariff for the licensed frequency band, wherein control data for the best effort data transmission is conveyed in the licensed frequency band.

7. The method of claim 5, further comprising:
at the base station (115), overriding the one or more new policies to selectively allocate the at least one licensed frequency band and the at least one unlicensed frequency band to the call session; and
at the base station (115), selectively allocating the at least one licensed frequency band and the at least one unlicensed frequency band to the call session based on at least one of a channel condition of the at least one licensed frequency band, a channel condition of the at least one unlicensed frequency band, and a load on the base station (115).

8. The method of claim 5, wherein receiving (540, 545) the one or more new policies comprises receiving at least one attribute-value pair associated with the at least one unlicensed frequency band.

9. The method of claim 8, wherein the at least one attribute-value pair is selected from a group comprising an identifier of the at least one unlicensed frequency band, handover criteria for the at least one unlicensed frequency band, a charging rule for the at least one unlicensed frequency band, an activation time for the one or more new policies, and a deactivation time for the one or more new policies.

10. The method of claim 5 wherein the transmitting a request to a SGW (215) to modify a call session for a user equipment (120) further comprises transmitting the request in response to at least one of a change in a load on the base station (115), a change in a channel condition of the at least one licensed frequency band, a change in a channel condition of the at least one unlicensed frequency band, handover of one or more other user equipment (120), and user input to the user equipment (120).

## Patentansprüche

1. Verfahren, umfassend:
Empfangen (515) einer Sitzungsänderungsanforderung aus einem bedienenden Gateway, SGW, (215) bei einer Gebührenabrechnungsfunkion, PCRF, (205) als Reaktion darauf, dass das SGW (215) eine Anforderung aus einer Basisstation (115) empfängt (505), um eine zwischen der Basisstation (115) und einem Benutzergerät (120) hergestellte Anrufsitzung zu ändern, und das SGW (215) das Ändern der Anrufsitzung bestimmt (510) hat; wobei das Verfahren **gekennzeichnet ist durch**:
Übertragen (520) einer Anforderung von Informationen aus der PCRF (205) als Reaktion auf die Sitzungsänderungsanforderung an ein Online-Abrechnungssystem, OCS, (210), die Tarife für die Nutzung mindestens eines unlizenzierten Frequenzbandes und mindestens eines lizenzierten Frequenzbandes angeben, die dem Benutzergerät (120) während der geänderten Anrufsitzung zur Verfügung stehen;
Definieren (525) einer oder mehrerer neuer Richtlinien für das Benutzergerät (120) bei der PCRF (205) basierend auf zuvor abgerufenen Profilinformationen und den aus dem OCS (210) empfangenen Informationen über Tarife; und
Übertragen (540, 545) der einen oder mehreren neuen Richtlinien zur Auswahl der Zuweisung des mindestens einen unlizenzierten Frequenzbandes und des mindestens einen lizenzierten Frequenzbandes aus der PCRF (205) an die Basisstation (115) über das SGW (215);
selektives Zuweisen (555) des mindestens einen unlizenzierten Frequenzbandes oder des mindestens einen lizenzierten Frequenzbandes **durch** die Basisstation (115) basierend auf einem Vergleich der Tarife für das mindestens eine unlizenzierte Frequenzband und das mindestens eine lizenzierte Frequenzband, die in der einen oder den mehreren empfangenen neuen Richtlinien enthalten sind.

2. Verfahren gemäß Anspruch 1, wobei das Übertragen (520) der Anforderung der die Tarife angebenden Informationen das Übertragen einer Anforderung umfasst, die mindestens ein erstes Attribut-Werte-Paar in Zusammenhang mit dem mindestens einen unlizenzierten Frequenzband aufweist, wobei das Übertragen (540, 545) der einen oder mehreren neuen Richtlinien an die Basisstation (115) das Übertragen mindestens eines zweiten Attribut-Werte-Paares in Zusammenhang mit dem mindestens einen unlizenzierten Frequenzband umfasst, und wobei das mindestens eine erste Attribut-Werte-Paar und das mindestens eine zweite Attribut-Werte-Paar aus einer Gruppe ausgewählt werden, die eine Kennung des mindestens einen unlizenzierten Frequenzbandes, Übergabekriterien für das mindestens eine unlizenzierte Frequenzband, eine Gebührenregel für das mindestens eine unlizenzierte Frequenzband, eine Aktivierungszeit für die eine oder die mehreren neuen Richtlinien und eine Deaktivierungszeit für die eine oder die mehreren neuen Richtlinien umfasst.

3. Verfahren gemäß Anspruch 1, wobei das Definieren (525) der einen oder mehreren neuen Richtlinien das Definieren einer Richtlinie umfasst, die angibt, dass eine bestmögliche Datenübertragung aus einem lizenzierten Frequenzband an ein unlizenziertes Frequenzband als Reaktion darauf zu übergeben ist, dass ein Datennutzungstarif für das unlizenzierte Frequenzband niedriger als ein Datennutzungstarif für das lizenzierte Frequenzband ist, wobei Steuerdaten für die bestmögliche Datenübertragung in dem lizenzierten Frequenzband übertragen werden.

4. Verfahren gemäß Anspruch 1, wobei das Definieren (525) des einen oder der mehreren neuen Richtlinien ferner das Definieren des einen oder der mehreren neuen Richtlinien basierend auf mindestens einem von einem Rauschabstand, einer empfangenen Signalstärke, einer Übertragungsgeschwindigkeit oder Geschwindigkeit eines Benutzergerätes (120), einem Standort des Benutzergerätes (120), den Tarifen und dem Eigentumsstatus der Basisstation (115) umfasst.

5. Verfahren, umfassend:
Übertragen (505) einer Anforderung an ein bedienendes Gateway, SGW, (215) aus einer Basisstation (115), die die drahtlose Konnektivität in mindestens einem lizenzierten Frequenzband und mindestens einem unlizenzierten Frequenzband unterstützt, um eine Anrufsitzung für ein Benutzergerät (120) zu ändern; wobei das Verfahren **gekennzeichnet ist durch**:
Empfangen (540, 545) einer oder mehrerer neuer Richtlinien für das Benutzergerät (120), die die Zuweisung des mindestens einen lizenzierten Frequenzbandes und des mindestens einen unlizenzierten Frequenzbandes für die Anrufsitzung regeln, auf der Basisstation (115) aus einer Gebührenabrechnungsfunktion, PCRF, (205) über das SGW (215), wobei die eine oder die mehreren neuen Richtlinien **durch** die PCRF (205) basierend auf zuvor zugegriffenen Profilinformationen und Tarifinformationen, die an der PCRF (205) aus einem Online-Abrechnungssystem, OCS, (210) empfangen (520) werden, zum Verwenden des mindestens einen lizenzierten Frequenzbandes und des mindestens einen unlizenzierten Frequenzbandes, die für das Benutzergerät (120) während der Anrufsitzung als Reaktion auf das Senden einer Anforderung der Tarifinformationen **durch** das PCRF (205) an das OCS (210) definiert (525) werden, und wobei die Basisstation (115) die eine oder die mehreren neuen Richtlinien als Reaktion darauf empfängt (540, 545), dass die PCRF (205) eine Sitzungsänderungsanforderung aus dem SGW (215) als Reaktion darauf empfangen (515) hat, dass das SGW (215) die Anforderung zur Änderung der Anrufsitzung aus der Basisstation (115) empfangen (505) hat und das SGW (215) das Ändern der Anrufsitzung bestimmt (510) hat;
Speichern (550) der einen oder mehreren neuen Richtlinien auf der Basisstation (115); und
selektives Zuweisen (555) des mindestens einen lizenzierten Frequenzbandes oder des mindestens einen unlizenzierten Frequenzbandes **durch** die Basisstation (115) basierend auf einem Vergleich von Tarifen für das mindestens eine lizenzierte Frequenzband und das mindestens eine unlizenzierte Frequenzband, die in der einen oder den mehreren neuen empfangenen Richtlinien enthalten sind.

6. Verfahren nach Anspruch 5,
wobei das selektive Zuweisen (555) des mindestens einen lizenzierten Frequenzbandes und des mindestens einen unlizenzierten Frequenzbandes das Übergeben der bestmöglichen Datenübertragung aus einem lizenzierten Frequenzband an ein unlizenziertes Frequenzband als Reaktion auf einen Datennutzungstarif für das unlizenzierte Frequenzband umfasst, der niedriger als ein Datennutzungstarif für das lizenzierte Frequenzband ist, wobei Steuerdaten für die bestmögliche Datenübertragung in dem lizenzierten Frequenzband übertragen werden.

7. Verfahren gemäß Anspruch 5, ferner umfassend:
Übergehen der einen oder mehreren neuen Richtlinien auf der Basisstation (115), um selektiv das mindestens eine lizenzierte Frequenzband und das mindestens eine unlizenzierte Frequenzband für die Anrufsitzung auszuwählen; und
selektives Zuweisen des mindestens einen lizenzierten Frequenzbandes und des mindestens einen unlizenzierten Frequenzbandes auf der Basisstation (115) an die Anrufsitzung basierend auf mindestens einem von einem Kanalzustand des mindestens einen lizenzierten Frequenzbandes, einem Kanalzustand des mindestens einen unlizenzierten Frequenzbandes und einer Last auf der Basisstation (115).

8. Verfahren gemäß Anspruch 5, wobei das Empfangen (540, 545) des einen oder der mehreren neuen Richtlinien das Empfangen mindestens eines Attribut-Werte-Paares im Zusammenhang mit dem mindestens einen unlizenzierten Frequenzband umfasst.

9. Verfahren gemäß Anspruch 8, wobei das mindestens eine Attribut-Werte-Paar aus einer Gruppe ausgewählt wird, die eine Kennung des mindestens einen unlizenzierten Frequenzbandes, Übergabekriterien für das mindestens eine unlizenzierte Frequenzband, eine Gebührenregel für das mindestens eine unlizenzierte Frequenzband, eine Aktivierungszeit für die eine oder die mehreren neuen Richtlinien und eine Deaktivierungszeit für die eine oder die mehreren neuen Richtlinien umfasst.

10. Verfahren gemäß Anspruch 5, wobei das Übertragen einer Anforderung an ein SGW (215), eine Anrufsitzung für ein Benutzergerät (120) zu ändern, ferner das Übertragen der Anforderung als Reaktion auf mindestens eines von einer Änderung einer Last auf der Basisstation (115), einer Änderung eines Kanalzustands des mindestens einen lizenzierten Frequenzbandes, einer Änderung eines Kanalzustands des mindestens einen unlizenzierten Frequenzbandes, einer Übergabe eines oder mehrerer anderer Benutzergeräte (120) und einer Benutzereingabe in das Benutzergerät (120) umfasst.

## Revendications

1. Procédé comprenant :
la réception (515), au niveau d'une fonction de facturation et de règles de politique, PCRF (205), d'une demande de modification de session depuis une passerelle de desserte, SGW (215) en réponse à la réception (505) par la SGW (215) d'une demande depuis une station de base (115) de modifier une session d'appel établie entre la station de base (115) et un équipement utilisateur (120) ; la SGW (215) ayant déterminé (510) de modifier la session d'appel ; le procédé étant **caractérisé par** :
la transmission (520), depuis la PCRF (205) en réponse à la demande de modification de session, d'une demande à un système de facturation en ligne, OCS (210), d'informations indiquant des tarifs pour utiliser au moins une bande de fréquence sans licence et au moins une bande de fréquence sous licence qui sont à la disposition de l'équipement utilisateur (120) pendant la session d'appel modifiée ;
la définition (525), au niveau de la PCRF (205), d'une ou de plusieurs nouvelles politiques pour l'équipement utilisateur (120) sur la base d'informations de profil consultées précédemment et des informations reçues indiquant des tarifs depuis l'OCS (210) ; et
la transmission (540, 545) des une ou plusieurs nouvelles politiques pour l'attribution de sélection de l'au moins une bande de fréquence sans licence et de l'au moins une bande de fréquence sous licence de la PCRF (205) à la station de base (115) via la SGW (215) ;
l'attribution sélective (555), par la station de base (115), de l'au moins une bande de fréquence sans licence ou de l'au moins une bande de fréquence sous licence sur la base d'une comparaison de tarifs pour l'au moins une bande de fréquence sans licence et l'au moins une bande de fréquence sous licence contenus dans les une ou plusieurs nouvelles politiques reçues.

2. Procédé selon la revendication 1, dans lequel la transmission (520) de la demande des informations indiquant les tarifs comprend la transmission d'une demande incluant au moins une première paire attribut-valeur associée à l'au moins une bande de fréquence sans licence, dans lequel la transmission (540, 545) des une ou plusieurs nouvelles politiques à la station de base (115) comprend la transmission d'au moins une seconde paire attribut-valeur associée à l'au moins une bande de fréquence sans licence, et dans lequel l'au moins une première paire attribut-valeur et l'au moins une seconde paire attribut-valeur sont sélectionnées dans un groupe comprenant un identifiant de l'au moins une bande de fréquence sans licence, des critères de transfert intercellulaire pour l'au moins une bande de fréquence sans licence, une règle de facturation pour l'au moins une bande de fréquence sans licence, un temps d'activation pour les une ou plusieurs nouvelles politiques, et un temps de désactivation pour les une ou plusieurs nouvelles politiques.

3. Procédé selon la revendication 1, dans lequel la définition (525) des une ou plusieurs nouvelles politiques comprend la définition d'une politique indiquant qu'une transmission de données de meilleur effort doit faire l'objet d'un transfert intercellulaire depuis une bande de fréquence sous licence à une bande de fréquence sans licence en réponse au fait que le tarif d'usage de données pour la bande de fréquence sans licence est inférieur à un tarif d'usage de données pour la bande de fréquence sous licence, dans lequel des données de commande pour la transmission de données de meilleur effort sont acheminées dans la bande de fréquence sous licence.

4. Procédé selon la revendication 1, dans lequel la définition (525) des une ou plusieurs nouvelles politiques comprend en outre la définition des une ou plusieurs nouvelles politiques sur la base d'au moins l'un parmi un rapport signal sur bruit, une intensité de signal reçu, une vitesse ou rapidité d'un équipement utilisateur (120), un emplacement de l'équipement utilisateur (120), les tarifs, et la propriété de la station de base (115).

5. Procédé comprenant :
la transmission (505), depuis une station de base (115) qui prend en charge une connectivité sans fil dans au moins une bande de fréquence sous licence et au moins une bande de fréquence sans licence, d'une demande à une passerelle de desserte, SGW (215) pour modifier une session d'appel pour un équipement utilisateur (120) ;
le procédé étant **caractérisé par** :
la réception (540, 545), au niveau de la station de base (115) depuis une fonction de facturation et de règles de politique, PCRF (205), via la SGW (215), d'une ou de plusieurs nouvelles politiques pour l'équipement utilisateur (120) régissant l'attribution de l'au moins une bande de fréquence sous licence et de l'au moins une bande de fréquence sans licence à la session d'appel, dans lequel les une ou plusieurs nouvelles politiques sont définies (525) par la PCRF (205) sur la base d'informations de profil consultées précédemment et d'informations indiquant des tarifs reçues (520) au niveau de la PCRF (205) depuis un système de facturation en ligne, OCS (210) pour l'utilisation de l'au moins une bande de fréquence sous licence et de l'au moins une bande de fréquence sans licence qui sont à la disposition de l'équipement utilisateur (120) pendant la session d'appel en réponse à la transmission par la PCRF (205) d'une demande à l'OCS (210) des informations indiquant des tarifs, et dans lequel la station de base (115) reçoit (540, 545) les une ou plusieurs nouvelles politiques en réponse à la réception (515) par la PCRF (205) d'une demande de modification de session depuis la SGW (215), en réponse à la réception (505) par la SGW (215) de la demande depuis la station de base (115) de modifier la session d'appel et à la détermination (510) par la SGW (215) de modifier la session d'appel ; et
le stockage (550) des une ou plusieurs nouvelles politiques au niveau de la station de base (115) ; et l'attribution sélective (555), par la station de base (115), de l'au moins une bande de fréquence sous licence ou de l'au moins une bande de fréquence sans licence sur la base d'une comparaison de tarifs pour l'au moins une bande de fréquence sous licence et l'au moins une bande de fréquence sans licence contenus dans les une ou plusieurs nouvelles politiques reçues.

6. Procédé selon la revendication 5,
dans lequel l'attribution sélective (555) de l'au moins une bande de fréquence sous licence et de l'au moins une bande de fréquence sans licence comprend le transfert intercellulaire d'une transmission de données de meilleur effort depuis une bande de fréquence sous licence à une bande de fréquence sans licence en réponse au fait qu'un tarif d'usage de données pour la bande de fréquence sans licence est inférieur à un tarif d'usage de données pour la bande de fréquence sous licence, dans lequel des données de commande pour la transmission de données de meilleur effort sont acheminées dans la bande de fréquence sous licence.

7. Procédé selon la revendication 5, comprenant en outre :
au niveau de la station de base (115), le surpassement des une ou plusieurs nouvelles politiques pour attribuer sélectivement l'au moins une bande de fréquence sous licence et l'au moins une bande de fréquence sans licence à la session d'appel ; et
au niveau de la station de base (115), l'attribution sélective de l'au moins une bande de fréquence sous licence et de l'au moins une bande de fréquence sans licence à la session d'appel sur la base d'au moins l'une parmi une condition de canal de l'au moins une bande de fréquence sous licence, une condition de canal de l'au moins une bande de fréquence sans licence, et une charge sur la station de base (115).

8. Procédé selon la revendication 5, dans lequel la réception (540, 545) des une ou plusieurs nouvelles politiques comprend la réception d'au moins une paire attribut-valeur associée à l'au moins une bande de fréquence sans licence.

9. Procédé selon la revendication 8, dans lequel l'au moins une paire attribut-valeur est sélectionnée dans un groupe comprenant un identifiant de l'au moins une bande de fréquence sans licence, des critères de transfert intercellulaire pour l'au moins une bande de fréquence sans licence, une règle de facturation pour l'au moins une bande de fréquence sans licence, un temps d'activation pour les une ou plusieurs nouvelles politiques, et un temps de désactivation pour les une ou plusieurs nouvelles politiques.

10. Procédé selon la revendication 5, dans lequel la transmission d'une demande à une SGW (215) de modifier une session d'appel pour un équipement utilisateur (120) comprend en outre la transmission de la demande en réponse à au moins l'un parmi un changement d'une charge sur la station de base (115), un changement d'une condition de canal de l'au moins une bande de fréquence sous licence, un changement d'une condition de canal de l'au moins une bande de fréquence sans licence, un transfert intercellulaire d'un ou de plusieurs autres équipements utilisateur (120), et une entrée d'utilisateur à l'équipement utilisateur (120).
